# EUROPEAN PATENT APPLICATION

(11) **EP 3 587 007 A1**
(43) Date of publication of application: **01.01.2020**
(21) Application number: 19181349.2
(22) Date of filing: 19.06.2019
(51) Int. Cl.: B22F 3/105, B33Y 10/00, B33Y 30/00

(54) **FLEXIBLE HYBRID ADDITIVE MANUFACTURING FOR SPECIFIED ALLOY CREATION**

(30) Priority: 22.06.2018 US 201816015320
(71) Applicant: Lincoln Global, Inc., Santa Fe Springs, CA 90670 (US)
(72) Inventor: Narayanan, Badri K, Highland Heights, OH Ohio 44143 (US)
(74) Representative: Grosse Schumacher Knauer von Hirschhausen

(57) **Abstract**

Embodiments of systems (740) and methods of additive manufacturing are disclosed. One embodiment includes an additive manufacturing system (740) configured to deposit a metal powder (510), having a first chemical composition, onto a substrate (600) or a previous layer of a part (51, 115) being additively manufactured, and tacking tracks of the metal powder (510) to the substrate (600) or the previous layer according to a pattern of a present layer of the part by applying a first energy along the tracks of the metal powder (510) to sinter the tracks. The system is configured to deposit a metal wire (550), having a second chemical composition, along the tracks of the metal powder. Depositing the metal wire includes applying a second energy to the metal wire (550) and the tracks of the metal powder (510), as sintered, to form a specified homogenous alloy of the first chemical composition and the second chemical composition as at least a portion of the present layer.

## Description

### FIELD OF THE INVENTION

The invention is related to an additive manufacturing system according to claims 1, 10 and 13. Embodiments of the present invention relate to systems and methods related to additive manufacturing, and more specifically to metal additive manufacturing techniques using hybrid powder and wire deposition.

### TECHNICAL BACKGROUND

Conventionally, additive manufacturing processes are able to make near net shape parts at relatively low deposition rates (e.g., powder: 30-100 cm³/hr; wire: 800-2000 cm²/hr) where each part is built up layer-by-layer. Build times can be long and, occasionally, defects such as lack-of-fusion caused by low heat inputs can be created. Wire deposition processes are typically restricted by the type of wire. However, deposition processes that use powders provide a lot more flexibility to create unique compositions.

### DESCRIPTION

In order to improve additive manufacturing, an additive manufacturing system according to claims 1, 10 and 13 is described. Preferred embodiments are subject of the subclaims. Embodiments of the present invention include systems and methods related to additive manufacturing that deposit powder and wire in a largely decoupled manner to form a specified homogenous alloy for a layer of a three-dimensional (3D) part. In one embodiment, an additive manufacturing system is provided. The system includes a computer control system configured to store patterns of multiple layers of a three-dimensional part to be additively manufactured. The system also includes a computer controlled powder deposition apparatus operatively connected to the computer control system and configured to deposit first tracks of metal powder, having a first chemical composition, onto a substrate according to a first pattern of a first layer of the three-dimensional part under the control of the computer control system. The system further includes a first computer controlled energy delivery apparatus operatively connected to the computer control system and configured to tack the first tracks of metal powder to the substrate along the first pattern under the control of the computer control system by applying a first energy to the first tracks of metal powder along the first pattern to at least partially sinter the first tracks of metal powder. The system also includes a second computer controlled energy delivery apparatus operatively connected to the computer control system and configured to deposit a first metal wire, having a second chemical composition, along the first tracks of metal powder by applying a second energy to the first metal wire and the first tracks of metal powder, as at least partially sintered, to form a first specified homogenous alloy of the first chemical composition and the second chemical composition as at least a portion of the first layer. (In an alternative embodiment, the first and second computer controlled delivery apparatuses may be the same apparatus, but performing the different functions of tacking and depositing metal wire). In one embodiment, the computer control system is further configured to control the first computer controlled energy delivery apparatus and the second computer controlled energy delivery apparatus such that an amount of the first energy applied per unit length is less than an amount of the second energy applied per unit length. In one embodiment, the computer control system is further configured to control a specified ratio of powder amount deposited per unit length by the computer controlled powder deposition apparatus and a specified ratio of wire amount deposited per unit length by the second computer controlled energy delivery apparatus to achieve the first specified homogenous alloy. In one embodiment, the computer controlled powder deposition apparatus, the first computer controlled energy delivery apparatus, and the second computer controlled energy delivery apparatus are independently controlled by the computer control system and are operationally decoupled from each other. In one embodiment, the computer controlled powder deposition apparatus and the first computer controlled energy delivery apparatus are dependently controlled by the computer control system and are operationally coupled to each other, and the second computer controlled energy delivery apparatus is independently controlled by the computer control system and is operationally decoupled from the computer controlled powder deposition apparatus and the first computer controlled energy delivery apparatus. In one embodiment, the first chemical composition and the second chemical composition have no chemical elements in common. In one embodiment, the first chemical composition and the second chemical composition have at least one chemical element in common. In one embodiment, the computer controlled powder deposition apparatus is configured to deposit second tracks of metal powder, having the first chemical composition, onto the first layer according to a second pattern of a second layer of the three-dimensional part to be additively manufactured; the first computer controlled energy delivery apparatus is configured to tack the second tracks of metal powder to the first layer along the second pattern by applying a third energy to the second tracks of metal powder along the second pattern to at least partially sinter the second tracks of metal powder; and the second computer controlled energy delivery apparatus is configured to deposit a second metal wire, having the second chemical composition, along the second tracks of metal powder by applying a fourth energy to the second metal wire and the second tracks of metal powder, as at least partially sintered, to form the first specified homogenous alloy of the first chemical composition and the second chemical composition as at least a portion of the second layer. In one embodiment, the computer controlled powder deposition apparatus is configured to deposit second tracks of metal powder, having a third chemical composition, onto the first layer according to a second pattern of a second layer of the three-dimensional part to be additively manufactured; the first computer controlled energy delivery apparatus is configured to tack the second tracks of metal powder to the first layer along the second pattern by applying a third energy to the second tracks of metal powder along the second pattern to at least partially sinter the second tracks of metal powder; and the second computer controlled energy delivery apparatus is configured to deposit a second metal wire, having a fourth chemical composition, along the second tracks of metal powder by applying a fourth energy to the second metal wire and the second tracks of metal powder, as at least partially sintered, to form a second specified homogenous alloy of the third chemical composition and the fourth chemical composition as at least a portion of the second layer. In one embodiment, the first energy is derived from at least one of a laser beam, a plasma beam, an electric arc, or an electron beam generated by the first computer controlled energy delivery apparatus. In one embodiment, the second energy is derived from at least one of a laser beam, a plasma beam, an electric arc, or an electron beam generated by the second computer controlled energy delivery apparatus.

One embodiment includes an additive manufacturing system. The system includes a powder deposition apparatus configured to deposit a metal powder, having a first chemical composition, onto a substrate or onto a previous layer of a three-dimensional part being additively manufactured, wherein patterns of multiple layers of the three-dimensional part are represented and stored as digital data within the additive manufacturing system. The system also includes a first energy delivery apparatus configured to tack tracks of the metal powder to the substrate or to the previous layer according to a pattern of a present layer of the three-dimensional part being additively manufactured by applying a first energy along the tracks of the metal powder to at least partially sinter the tracks of the metal powder. The system further includes a second energy delivery apparatus configured to deposit a metal wire, having a second chemical composition, along the tracks of the metal powder by applying a second energy to the metal wire and the tracks of the metal powder, as at least partially sintered, to form a specified homogenous alloy of the first chemical composition and the second chemical composition as at least a portion of the present layer. In one embodiment, the system includes at least one computer controller configured to control the first energy delivery apparatus and the second energy delivery apparatus such that an amount of the first energy applied per unit length is different than an amount of the second energy applied per unit length. In one embodiment, the system includes at least one computer controller configured to control a specified ratio of powder amount deposited per unit length by the powder deposition apparatus and a specified ratio of wire amount deposited per unit length by the second energy delivery apparatus to achieve the specified homogenous alloy. In one embodiment, the powder deposition apparatus, the first energy delivery apparatus, and the second energy delivery apparatus are independently controlled and are operationally decoupled from each other.

One embodiment includes an additive manufacturing system. The system includes a first energy delivery apparatus configured to, for a present layer of a three-dimensional part being additively manufactured, tack previously deposited tracks of a metal powder onto a first region of a previous layer of the three-dimensional part by applying a first energy from the first energy delivery apparatus along the tracks of the metal powder to at least partially sinter the tracks of the metal powder. Patterns of multiple layers of the three-dimensional part are represented and stored as digital data within the additive manufacturing system. The system also includes a second energy delivery apparatus. The second energy delivery apparatus is configured to deposit a first metal wire onto a second region of the previous layer, at the same time as the tacking of the previously deposited tracks of the metal powder onto the first region is occurring, by applying a second energy to at least the first metal wire to form at least a first portion of the present layer. The second energy delivery apparatus is also configured to deposit a second metal wire along the at least partially sintered tracks of the metal powder of the first region by applying a third energy to the second metal wire and the at least partially sintered tracks of the metal powder of the first region to form at least a second portion of the present layer. In one embodiment, the system includes at least one computer controller configured to control the first energy delivery apparatus and the second energy delivery apparatus such that an amount of the first energy applied per unit length is different than an amount of the third energy applied per unit length. In one embodiment, the system includes at least one computer controller configured to control the first energy delivery apparatus and the second energy delivery apparatus such that an amount of the first energy applied per unit length is different than an amount of the second energy applied per unit length. In one embodiment, the system includes at least one computer controller configured to control the second energy delivery apparatus such that an amount of the second energy applied per unit length is different than an amount of the third energy applied per unit length. In one embodiment, the system includes at least one computer controller configured to control the second energy delivery apparatus, such that an amount of the second energy applied per unit length is the same as an amount of the third energy applied per unit length.

Numerous aspects of the general inventive concepts will become readily apparent from the following detailed description of exemplary embodiments, from the claims, and from the accompanying drawings.

### BRIEF DESCRIPTION OF THE DRAWINGS

The accompanying drawings, which are incorporated in and constitute a part of the specification, illustrate various embodiments of the disclosure. It will be appreciated that the illustrated element boundaries (e.g., boxes, groups of boxes, or other shapes) in the figures represent one embodiment of boundaries. In some embodiments, one element may be designed as multiple elements or that multiple elements may be designed as one element. In some embodiments, an element shown as an internal component of another element may be implemented as an external component and vice versa. Furthermore, elements may not be drawn to scale.
FIG. 1 illustrates an embodiment a computer controlled energy delivery apparatus of an additive manufacturing system configured to deposit metal wire during an additive manufacturing process;
FIG. 2 illustrates an embodiment of an electrode head having multiple electrodes in an array that are configured to deposit material onto a workpiece substrate or a part in a direction of travel;
FIG. 3 illustrates an embodiment a computer controlled energy delivery apparatus of an additive manufacturing system configured as a laser hot wire (LHW) apparatus;
FIG. 4 illustrates a flowchart of a first embodiment of an additive manufacturing method;
FIG. 5 graphically illustrates the additive manufacturing method of FIG. 4;
FIG. 6 graphically illustrates one embodiment of tracks of metal power deposited onto a substrate according to a pattern of a layer of a three-dimensional part to be manufactured;
FIG. 7 illustrates a system block diagram of one embodiment of an additive manufacturing system;
FIG. 8 illustrates a flowchart of a second embodiment of an additive manufacturing method that can be performed using the additive manufacturing system of FIG. 7;
FIG. 9 illustrates a flowchart of a third embodiment of an additive manufacturing method that can be performed using the additive manufacturing system of FIG. 7; and
FIG. 10 illustrates an embodiment of an example computer control system of the additive manufacturing system of FIG. 7.

### DETAILED DESCRIPTION

As is generally known, additive manufacturing is a process in which a material is deposited onto a substrate or part so as to create a desired manufactured product. In some applications the article of manufacture can be quite complex. However, known methods and systems used for additive manufacturing tend to be slow and have limited performance. Embodiments of the present invention address those areas by providing a high speed and highly accurate additive manufacturing method and system.

Embodiments of additive manufacturing systems and methods are disclosed. In one embodiment, an additive manufacturing system includes a computer controlled powder deposition apparatus, a first computer controlled energy delivery apparatus, a second computer controlled energy delivery apparatus, and a computer control system. The computer control system is configured to control, for example, motion of at least portions of the computer controlled powder deposition apparatus, the first computer controlled energy deliver apparatus, and the second computer controlled energy delivery apparatus. For example, in one embodiment, the computer control system controls the powder deposition apparatus to deposit tracks of metal powder to additively manufacture layers of a three-dimensional (3D) part. The computer control system is also configured to control, for example, various parameters of the powder deposition apparatus, the first energy delivery apparatus, and the second energy delivery apparatus as discussed later herein.

Embodiments of a computer controlled energy delivery apparatus may include, for example, at least one of a laser-based subsystem, a plasma based subsystem, an arc based subsystem, or an electron beam based subsystem to, for example, to sinter a metal powder or melt a metal wire into the sintered metal powder. Furthermore, some embodiments of a computer controlled energy delivery apparatus may include, for example, a wire delivery or feeding system to feed/deliver a consumable metal wire to additively manufacture a 3D part on a substrate. Also, some embodiments of a computer controlled energy delivery apparatus may include, for example, kinematic control elements (e.g., robotics) or other types of control elements (e.g., optical control elements) to move a laser beam, a plasma beam, an electric arc, an electron beam, or a consumable metal wire with respect to a 3D part being additively manufactured on a substrate.

Embodiments of the additive manufacturing system are configured to implement an additive manufacturing method. The additive manufacturing method provides for the creation of layers of a 3D part to be additively manufactured by controlling the deposition of tracks of metal powder, the sintering of the tracks of powder, and the deposition of metal wire over the tracks of metal powder as described in detail later herein. The processes of depositing the tracks of metal powder, sintering the tracks of metal powder, and depositing the metal wire over the tracks of sintered metal powder can be independently controlled and may be operationally decoupled from each other (e.g., decoupled in space and/or time), in accordance with some embodiments, to provide flexibility and efficiency in additively manufacturing a 3D part.

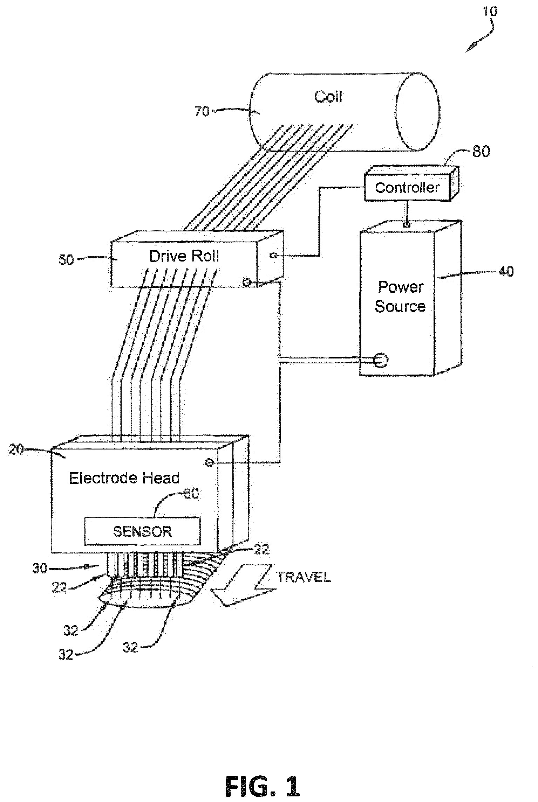

The examples and figures herein are illustrative only and are not meant to limit the subject invention, which is measured by the scope and spirit of the claims. Referring now to the drawings, wherein the showings are for the purpose of illustrating exemplary embodiments of the subject invention only and not for the purpose of limiting same, FIG. 1 illustrates an embodiment of a first type of a computer controlled energy delivery apparatus of an additive manufacturing system configured to deposit metal wire during an additive manufacturing process. It is envisioned that the computer controlled energy delivery apparatus may typically be used to help additively manufacture a part, layer-by-layer, by a welding process such as, for example, gas metal arc welding (GMAW), flux-cored arc welding (FCAW), or gas tungsten arc welding (GTAW).

As illustrated in FIG. 1, the computer controlled energy delivery apparatus 10 includes an electrode head 20, wherein the electrode head 20 concurrently houses an array 30 of multiple electrodes 32 (e.g. consumable welding electrodes/wires). It is to be appreciated that the multiple electrodes 32 can be continuously fed, periodically fed, or fed based on a predetermined order. The electrodes 32 may be gas-shielded, self-shielded, or metal cored. These electrodes may be solid core, metal core, or flux cored wires, to be used under gas shielding. In the instance of cored electrodes, it is contemplated that the electrode sheath may be, for example, carbon steel, stainless steel, or a nickel alloy. The electrode head 20 houses the array 30 such that electrodes 32 are in a spaced apart configuration for controllably depositing material as part of forming a layer of a 3D part (e.g., by depositing molten metal wire material over previously deposited metal powder on a substrate surface of an associated workpiece or a previous layer of a 3D part being manufactured). It is to be appreciated and understood that the electrode head 20 can be any suitable electrode head that houses the array 30 to deliver the electrodes 32. For example, the electrode head 20 can be an assembly that utilizes individual contact tips for the array 30 or a contact assembly that universally houses and encases the electrode array 30. The coil 70 may include a plurality of individual coils, each coil containing a single electrode (e.g., a welding wire), which are arranged along a common axis of rotation. Still any manner of delivering filler wire or additive material may be chosen without departing from the intended scope of coverage of the embodiments of the subject disclosure. For example, in one embodiment, the electrode head 20 is configured to provide a single consumable metal wire instead of an array of wires.

In one embodiment, as illustrated in FIG. 1, electrode head 20 is adapted to receive the array 30 of associated multiple fed electrodes 32. The system 10 includes means for driving the array 30 of electrodes 32 through the electrode head 20. It is envisioned that the means for driving includes a plurality of drive rolls 50 or other wire feeder device. Each of the plurality of drive rolls 50 may be associated with one or more of the electrodes 32. In one aspect, two electrodes 32 may be associated with a single set of drive rolls 50, although it is envisioned that the relationship between the number of electrodes and the number of wire feeders may be configured such that any number of electrodes may be associated with a single set of drive rolls as appropriate in an additive manufacturing process. In another embodiment, each electrode can be driven by a respective drive roll 50. Still, other relationships between drive roll 50 and one or more electrodes may be employed with sound engineering judgment.

In one example embodiment, the drive rolls 50 may be configured to drive the electrodes 32 through the electrode head 20 at a rate (e.g., a wire feed speed). In one embodiment, the electrodes 32 can be driven at substantially the same rate. In another embodiment, each electrode 32 can be driven at a respective rate that can be predetermined or dynamically identified during an additive manufacturing procedure. For instance, a rate (e.g., a wire feed speed) for one or more electrodes 32 can be predetermined based on material composition, type of weld, welding parameters, workpiece/substrate, among others. In another embodiment, a rate for one or more electrodes can be dynamically identified during the additive manufacturing process based upon criteria such as, but not limited to, user input, feedback, voltage, current, and temperature, among others.

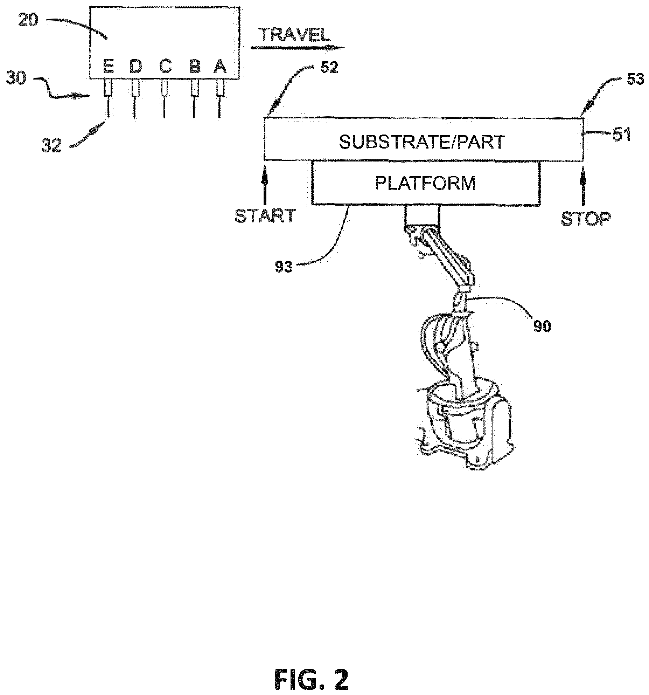

In one aspect of the embodiments of the subject invention, each of the electrodes 32 is configured to be connected to a welding power source 40. That is to say that during the additive manufacturing process, for instance, welding power can be delivered through each of the electrodes 32 in the array 30. As indicated above, power may be delivered from the welding power source 40 through welding cables (not shown) as attached at one end to studs (not shown). At the distal end, welding cables may be connected to the electrode head 20 through an electrode head connector. In the exemplary case of a single welding power source 40, a single electrode head connector may convey power from the welding cables commonly to the electrode head 20. Still, other means for conveying power from the welding cables to the electrode head 20 may be employed with sound engineering judgment. The power source 40 supplies electrical power for establishing a welding arc between each of the associated multiple fed electrodes and the associated substrate or part 51 (see FIG. 2). In particular, one or more power sources 40 can supply power to one or more electrodes 32 of the array 30 based on a predetermined order, for example.

Furthermore, an establishment of a welding arc between an electrode 32 and the substrate or part 51 can be provided by at least one of the power source 40 (e.g., supplying power, not supplying power, terminating power supply, and the like) or drive roll(s) 50 (e.g., driving electrode(s), not driving electrode(s), terminating drive of electrode, and the like). Thus, the electrodes 32 in the array 30 can be activated or deactivated based on a predetermined order, wherein the activation and/or deactivation can be based on the power source 40 and/or drive roll(s) 50. In one embodiment, controlled establishment of welding arcs to the electrodes 32 and/or controlled drive to the electrodes 32 is provided for additive manufacturing processes. As such, individual electrodes can be effectively "turned on" or "turned off' to enable the creation of contoured 2D shapes within a layer of the 3D part.

In a particular embodiment, a sensor 60 is configured to detect at least one of a location of the electrode head 20 on the substrate or part 51, an alignment of at least one electrode 32 of the array 30 compared to the substrate or part 51, or a nonalignment of at least one electrode 32 of the array 30 compared to the substrate or part 51. The sensor 60 can be coupled or affixed to the electrode head 20 at a location in order to detect a location of at least one electrode 32 in reference to the substrate or part 51. In another embodiment, a plurality of sensors 60 can be used. For example, a sensor can be used for each electrode 32. By way of example and not limitation, the sensor 60 can be an infrared (IR) sensor or a proximity sensor, among others. The sensor 60 detects alignment and/or nonalignment of at least one electrode 32 with respect to at least a portion of the substrate or part 51.

In accordance with one embodiment, the computer controlled energy delivery apparatus 10 includes a controller 80 which controls the power source 40, the drive roll 50, and the electrode head 20. For example, the controller 80 controls the operating characteristics (output voltage, output current, output waveform, etc.) of the electrical power of the power source 40. The controller 80 also controls the operating characteristics of the drive roll 50 (e.g., wire feed speed and arc establishment for each electrode 32 in the array 30). Furthermore, the controller 80 controls the operating characteristics of the electrode head 20 (e.g., position, travel speed, etc.). In accordance with one embodiment, the controller 80 may be integrated into the power source 40. Patterns of multiple layers of a 3D part to be additively manufactured are represented and stored as digital data within the controller 80, in accordance with one embodiment.

Referring to FIG. 2 the electrode head 20, having five (5) electrodes 32 in the array 30, can deposit material onto the substrate or part 51 in a controlled direction of travel. A platform 93 and a robot 90 may be used in an additive manufacturing system to rotate and/or translate the substrate or part 51, as controlled by the controller 80, in accordance with one embodiment. In an alternative embodiment, motion of the electrode head 20 may be similarly controlled by the controller 80 to rotate and/or translate the electrode head 20.

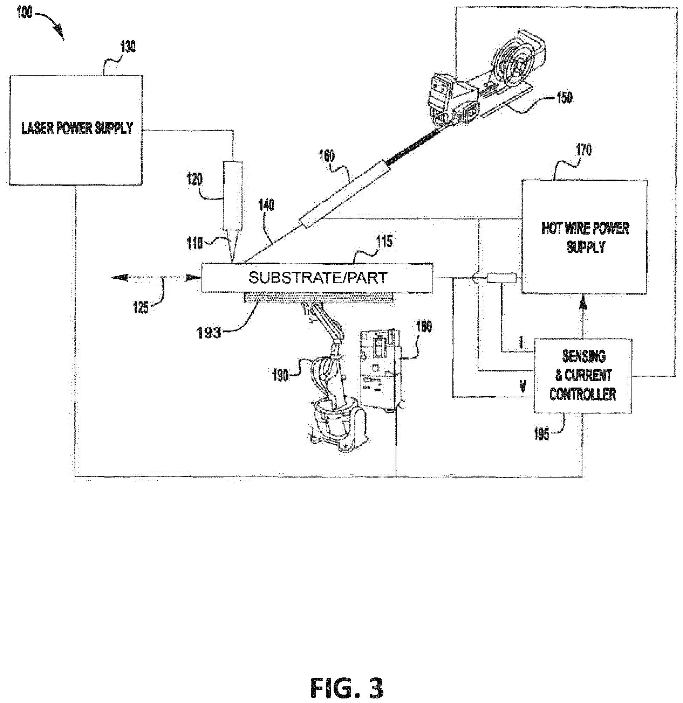

FIG. 3 shows an example of another type of a computer controlled energy delivery apparatus using a laser and a filler wire. In particular, FIG. 3 illustrates a functional schematic block diagram of an embodiment of a laser hot wire (LHW) energy delivery apparatus 100 of an additive manufacturing system (i.e., a computer controlled energy delivery apparatus for performing additive manufacturing). The energy delivery apparatus 100 of FIG. 3 includes an exemplary embodiment of a combination filler wire feeder and an energy source. In particular, the apparatus 100 includes a laser subsystem capable of focusing a laser beam 110 onto a substrate or part 115 to heat the substrate or part 115. In one embodiment, the laser subsystem is a high intensity energy source. The laser subsystem can be any type of high energy laser source, including but not limited to carbon dioxide, Nd:YAG, Yb-disk, YB-fiber, fiber delivered, or direct diode laser systems. In another embodiment, the laser subsystem is a low intensity energy source (e.g., to sinter or at least partially sinter metal powder deposited on the substrate or part 115). Other embodiments of the system may include at least one of an electron beam, a plasma arc welding subsystem, a gas tungsten arc welding subsystem, a gas metal arc welding subsystem, a flux cored arc welding subsystem, or a submerged arc welding subsystem serving as the energy source. In accordance with another embodiment, a portion of the elements of the apparatus 100 may be configured as a powder delivery and sintering system.

The following will repeatedly refer to the laser system, the beam, and the power supply. However, it should be understood that this reference is exemplary, as any energy source may be used. For example, a high intensity energy source can provide at least 500 W/cm². The laser subsystem includes a laser device 120 and a laser power supply 130 operatively connected to each other. The laser power supply 130 provides power to operate the laser device 120.

In one embodiment, the computer controlled energy delivery apparatus 100 also includes a hot filler wire feeder subsystem capable of providing at least one resistive filler wire 140 to make contact with the substrate or part 115 in the vicinity of the laser beam 110. The wire feeder subsystem includes a filler wire feeder 150, a contact tube 160, and a power supply 170. During operation, the filler wire 140 is resistance-heated by electrical current from the power supply 170 which is operatively connected between the contact tube 160 and the substrate or part 115. In accordance with one embodiment, the power supply 170 is a pulsed direct current (DC) power supply, although alternating current (AC) or other types of power supplies are possible as well. The wire 140 is fed from the filler wire feeder 150 through the contact tube 160 toward the substrate or part 115 and extends beyond the tube 160. The extension portion of the wire 140 is resistance-heated such that the extension portion approaches or reaches the melting point before contacting the substrate or part 115. The laser beam 110 may serve to melt some of the base metal of the substrate or part 115 to form a puddle and/or can also be used to melt the wire 140 onto the substrate or part 115. The power supply 170 provides energy needed to resistance-melt the filler wire 140. In some embodiments the power supply 170 provides all of the energy needed while in other embodiments the laser or other energy heat source can provide some of the energy. The feeder subsystem may be capable of simultaneously providing one or more wires, in accordance with certain other embodiments of the present invention.

The computer controlled energy delivery apparatus 100 further includes a motion control subsystem capable of moving the laser beam 110 (energy source) and the resistive filler wire 140 in a same controlled direction 125 along the substrate or part 115 (at least in a relative sense) such that the laser beam 110 and the resistive filler wire 140 remain in a fixed relation to each other. According to various embodiments, the relative motion between the substrate or part 115 and the laser/wire combination may be achieved by actually moving the substrate or part 115 or by moving the laser device 120 and the wire feeder subsystem.

In FIG. 3, the motion control subsystem includes a motion controller 180 operatively connected to a robot 190 having a platform 193 (e.g., a rotatable platform and/or a translatable platform). The motion controller 180 controls the motion of the robot 190. The robot 190 is operatively connected (e.g., mechanically secured) to the substrate or part 115 via the platform 193 to move the substrate or part 115 in, for example, a present direction of travel 125 such that the laser beam 110 and the wire 140 effectively travel along the substrate or part 115. In accordance with an alternative embodiment of the present invention, the laser device 120 and the contact tube 160 may be integrated into a single head. The head may be moved along the substrate or part 115 via a motion control subsystem operatively connected to the head.

In general, there are several methods in which an energy source/wire of a computer controlled energy delivery apparatus may be moved relative to a substrate or part. If the substrate or part is round, for example, the energy source/wire may be stationary and the substrate or part may be rotated under the energy source/wire. Alternatively, a robot arm or linear tractor may move parallel to the round substrate or part and, as the substrate or part is rotated, the energy source/wire may move continuously or index once per revolution to, for example, overlay the surface of the round substrate or part. If the substrate or part is flat or at least not round, the substrate or part may be moved under the energy source/wire as shown in FIG. 3. However, a robot arm or linear tractor or even a beam-mounted carriage may be used to move the energy source/wire head relative to the substrate or part. The robot 190 driving the platform 193 may be driven electrically, pneumatically, or hydraulically, in accordance with various embodiments.

The computer controlled energy delivery apparatus 100 further includes a sensing and current control subsystem 195 which is operatively connected to the substrate or part 115 and the contact tube 160 (i.e., effectively connected to the output of the power supply 170) and is capable of measuring a potential difference (i.e., a voltage V) between and a current (I) through the substrate or part 115 and the wire 140. The sensing and current control subsystem 195 may further be capable of calculating a resistance value (R=V/I) and/or a power value (P=V^{∗}I) from the measured voltage and current. In general, when the wire 140 is in contact with the substrate or part 115, the potential difference between the wire 140 and the substrate or part 115 is zero volts or very nearly zero volts. As a result, the sensing and current control subsystem 195 is capable of sensing when the resistive filler wire 140 is in contact with the substrate or part 115 and is operatively connected to the power supply 170 to be further capable of controlling the flow of current through the resistive filler wire 140 in response to the sensing. In accordance with another embodiment, the sensing and current controller 195 may be an integral part of the power supply 170.

As such, a first computer controlled energy delivery apparatus 10 and a second computer controlled energy delivery apparatus 100 have been described herein. The apparatuses 10 and 100 may be used separately or in combination (e.g., as subsystems to form a larger additive manufacturing system) to perform additive manufacturing operations as described herein. Other types of computer controlled energy delivery apparatuses may be used in an additive manufacturing system based on the requirements of the additive manufacturing processes described herein. For example, various types of computer controlled energy delivery apparatuses may be laser-based, plasma based, arc based, electron beam based, or some combination thereof. Such apparatuses may be used to perform additive manufacturing methods to sinter metal powder and melt metal wire into the sintered metal powder, as described next herein.

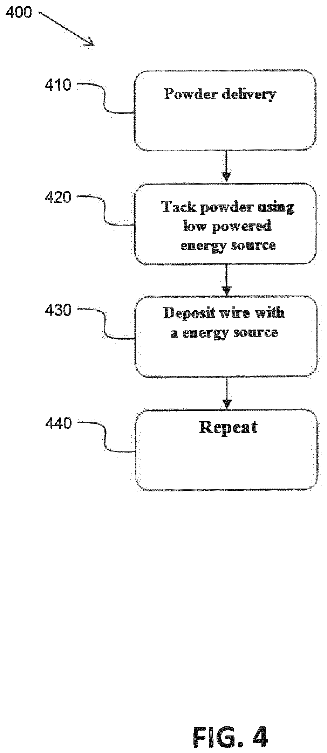

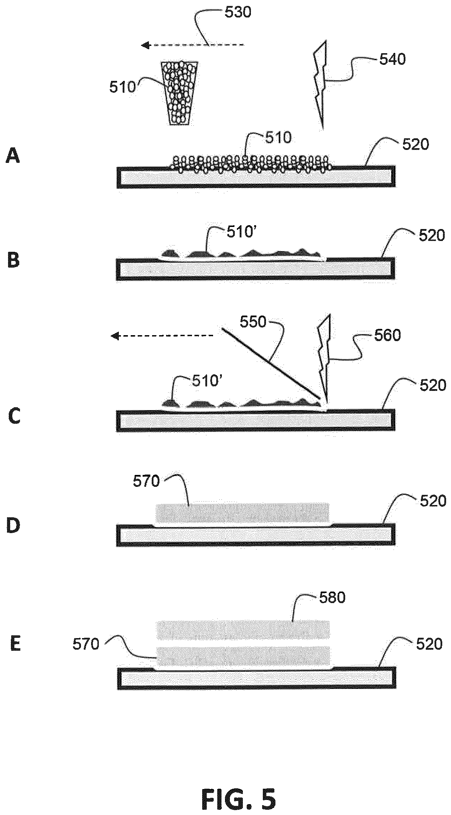

FIG. 4 illustrates a flowchart of a first embodiment of an additive manufacturing method 400, and FIG. 5 illustrates the additive manufacturing method 400 of FIG. 4 as a series of graphics. Various combinations of portions of the computer controlled energy delivery apparatuses of FIG. 1 and FIG. 3 discussed above herein may be used in an additive manufacturing system to perform the method 400 of FIG. 4, in accordance with various embodiments.

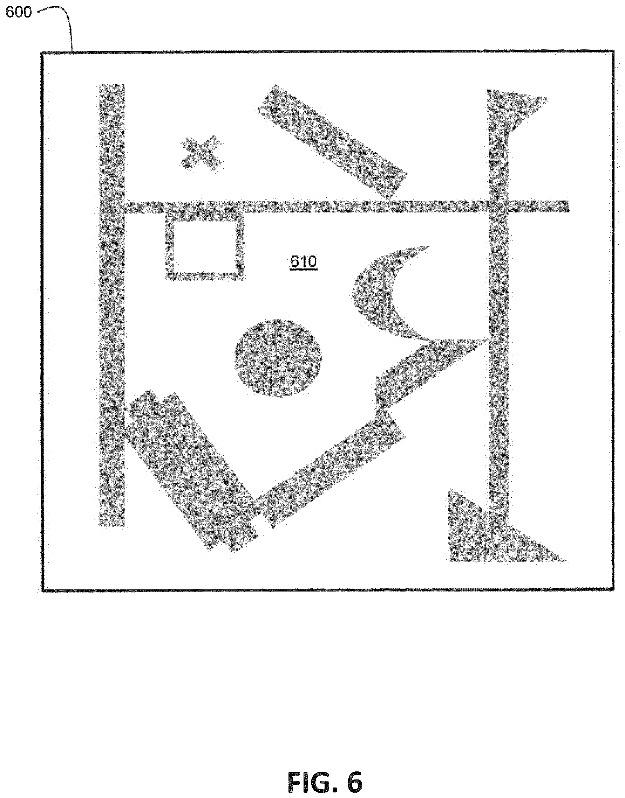

Referring to FIG. 4 and FIG. 5, at block 410 of the method 400, a metal powder 510 is delivered/deposited onto a substrate 520 as part of additively manufacturing a 3D part on the substrate 520 (see graphic A of FIG. 5). The metal powder 510 may be deposited onto the substrate 520 along one or more directions of travel 530 in accordance with a pattern of tracks defined for a first layer of the 3D part. The term "track" is used broadly herein and is not limited to linear tracks. Tracks may be of any suitable form. For example, FIG. 6 graphically illustrates one embodiment of tracks of metal power 610 deposited onto a substrate 600 according to a pattern of a layer of a 3D part to be manufactured. At block 420 of the method 400, after the metal powder 510 is deposited, the metal powder 510 is tacked to the substrate 520 by applying energy 540 to the metal powder 510. In one embodiment, the energy sinters (or at least partially sinters) the metal powder 510 to tack the metal powder 510 to the substrate 520. The sintered metal powder 510' is shown tacked to the substrate 520 in FIG. 5 (see graphics A and B of FIG. 5). In accordance with an alternative embodiment, the step of tacking the metal powder may be skipped and the method 400 may proceed directly to block 430. Some examples of metal powders that may be used for additive manufacturing include, but are not limited to, aluminum alloys, cobalt based alloys, nickel based alloys, stainless steels, titanium alloys, precious metal alloys, and copper alloys.

At block 430 of the method 400, a metal wire 550 is melted and deposited over the tacked metal powder 510' by applying energy 560 to form a specified homogeneous alloy. The metal wire 550 and the sintered metal powder 510' are fully melted together. The energy 560 melts the metal wire 550 into the sintered metal powder 510' along the tracks to form the specified homogeneous alloy as a first layer 570 of the 3D part (see graphics C and D of FIG. 5). The specified homogenous alloy is composed of the chemical composition of the metal powder 510 and the chemical composition of the metal wire 550.

At block 440, the process is repeated to create a next layer 580 of the 3D part (see graphic E of FIG. 5). When creating a next layer, compensation for alloy recovery may be performed since a next layer tends to melt into a previous layer, to a certain extent, as heat builds up. The composition of the powder and/or the wire for the next layer can be changed to compensate for dilution of the previous layer, in accordance with one embodiment.

The method 400 of FIG. 4 allows a 3D part to be built up on a substrate layer by layer in a manner which largely decouples powder deposition from wire deposition (e.g., decouples in space and/or time), providing more flexibility and efficiencies. The speed of deposition with powders has been limited because of various factors. The ability to independently deposit powder and wire using the method 400 allows the deposition to not be limited by the speed of the powder deposition. In the method 400, the powder does not need to be immediately sintered completely or melted completely. This allows the method 400 to not be limited by how fast the system can move for melting the powder tracks for minimal defects. Instead, wire based deposition is used to homogenize and decrease defects. However, by at least partially sintering the powder to tack the powder to the substrate or part, positioning of the part is not limited by the powder and the use of support structures may be greatly reduced or entirely eliminated. Furthermore, since it is not known to be able to deliver certain materials such as oxides, carbides, or nitrides in a solid wire form, the method 400 allows such materials to be provided in powder form and to use wire to deliver the matrix (e.g., nickel and tungsten carbide).

In one embodiment, the specified homogeneous alloy may exhibit Low Temperature Transformation (LTT) characteristics. That is the specified homogeneous alloy may exhibit a low martensite transformation temperature (e.g., in the range of 150°C to 300°C) in an as-deposited condition. Such LTT alloys that provide distortion-free deposits may be more readily achieved using the powder/wire deposition methods described herein. For example, elements can be added to the powder to compensate for thermal contraction or shrinkage due to cooling. The added elements effectively expand the lattice as the material cools, thus chemically compensating for thermal contraction.

In accordance with one embodiment, different compositions of powder and wire can provide different levels of "wetting" onto a substrate or a previous layer during deposition due to changes in surface tension. The amount of "wetting" affects the resolution of the track being deposited. "More wetting" (lower surface tension) effectively provides for better spatial resolution (e.g., along edges). The composition of the powder/wire combination can be adjusted during the additive manufacturing process to provide higher or lower levels of spatial resolution for different regions within a 3D part being additively manufactured. For example, in one embodiment, sulfur may be added to the powder along the edges of the 3D part to help change the surface tension of the final powder/wire deposit such that "more wetting" is provided at the edges, resulting in higher resolution at the edges.

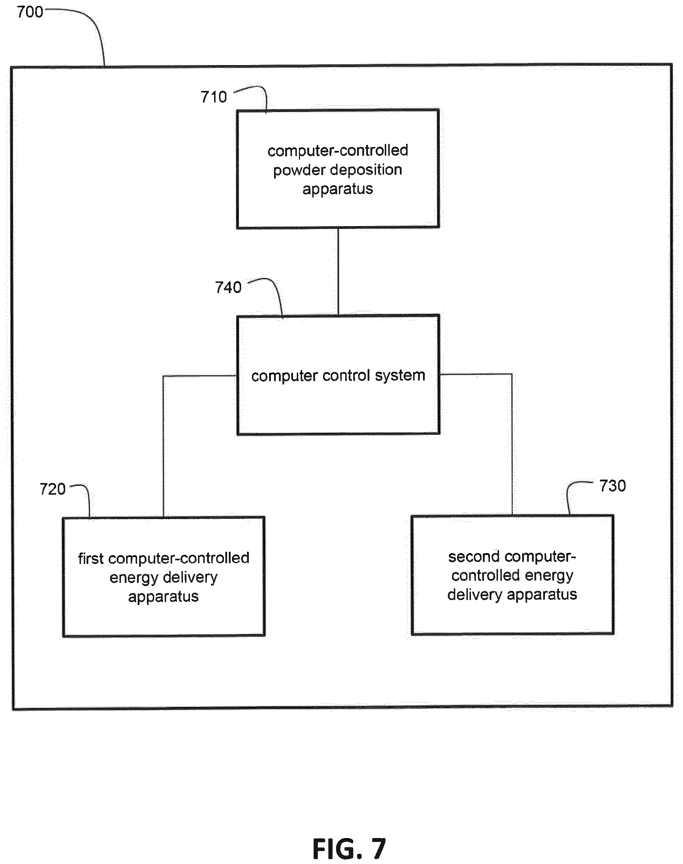

FIG. 7 illustrates a higher level system block diagram of one embodiment of an additive manufacturing system 740. In one embodiment, the system 740 is configured to implement the additive manufacturing method 400 of FIG. 4. The system 400 includes a computer controlled powder deposition apparatus 710, a first computer controlled energy delivery apparatus 720, a second computer controlled energy delivery apparatus 730, and a centralized computer control system 740. The centralized computer control system 740 is configured to control each of the computer controlled powder deposition apparatus 710, the first computer controlled energy delivery apparatus 720, and the second computer controlled energy delivery apparatus 730.

The computer control system 740 may control the computer controlled powder deposition apparatus 710, the first computer controlled energy delivery apparatus 720, and the second computer controlled energy delivery apparatus 730 in a coordinated manner or independently of each other in an operationally decoupled manner, in accordance with certain embodiments. In accordance with one embodiment, the computer controlled powder deposition apparatus and the first computer controlled energy delivery apparatus are dependently controlled by the computer control system and are operationally coupled to each other. However, the second computer controlled energy delivery apparatus is independently controlled by the computer control system and is operationally decoupled from the computer controlled powder deposition apparatus and the first computer controlled energy delivery apparatus.

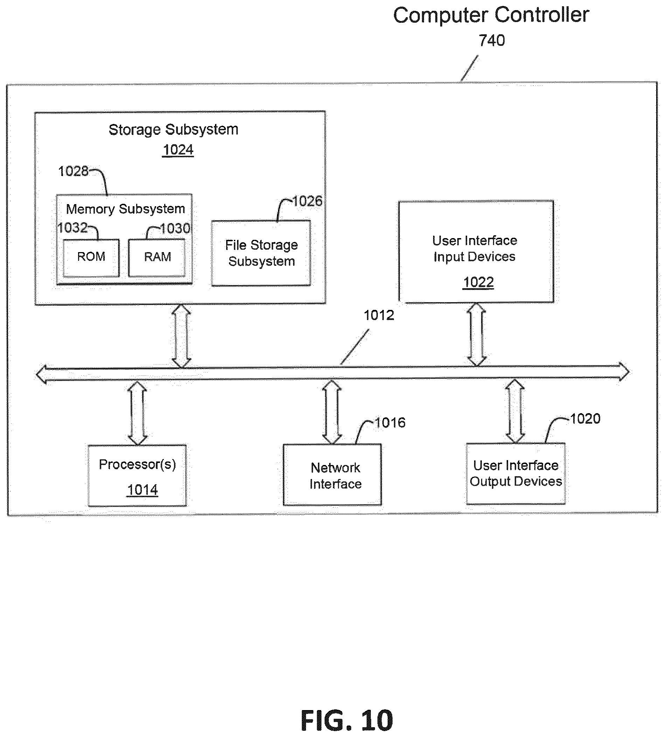

In accordance with an alternative embodiment, each of the computer controlled powder deposition apparatus 710, the first computer controlled energy delivery apparatus 720, and the second computer controlled energy delivery apparatus 730 has its own computer controller (i.e., the centralized computer controller 740 is distributed among the computer controlled powder deposition apparatus 710, the first computer controlled energy delivery apparatus 720, and the second computer controlled energy delivery apparatus 730). However, in accordance with one embodiment, the multiple computer controllers may communicate with each other to coordinate certain functional activities. Examples of embodiments of the computer control system 740 (or the individual computer controllers) are discussed herein with respect to FIG. 10.

The computer controlled powder deposition apparatus 710 may use motion control (e.g., robotic control), in accordance with one embodiment, to deposit tracks of metal powder onto a substrate or a layer of a 3D part to be additively manufactured. For example, robotic control may be used to move a depositing head of the powder deposition apparatus 710 and/or the substrate on which the 3D part is being additively manufactured, in accordance with various embodiments. Deposit amounts and deposit rates may be precisely controlled, along with dimensions of the deposited tracks. Control of deposit amounts, deposit rates, and track dimensions may use various types of controlled devices including, for example, powder delivery nozzles, powder feeders, and vibration-inducing devices. Other configurations of a computer controlled powder deposition apparatus are possible as well, in accordance with other embodiments, to perform the powder deposition functions described herein.

The first computer controlled energy delivery apparatus 720 is configured to sinter (or at least partially sinter) the tracks of metal powder deposited by the computer controlled powder deposition apparatus 710. For example, the first computer controlled energy delivery apparatus 720 may include combinations of certain elements of the computer controlled energy delivery apparatuses of FIGS. 1-3 discussed above herein (e.g., a laser device 120, a laser power supply 130, and a robot 190). In accordance with one embodiment, a laser beam produced by a laser device can be defocused for tacking/sintering a deposited metal powder. In accordance with another embodiment, a laser head of a laser device may be wobbled to spread the heat produced by a laser beam across the deposited metal powder to achieve tacking/sintering.

The second computer controlled energy delivery apparatus 730 is configured to deposit metal wire over the sintered tracks of metal powder. For example, the second computer controlled energy delivery apparatus 770 may include other combinations of certain elements of the computer controlled energy delivery apparatuses of FIGS. 1-3 discussed above herein (e.g., an electrode head 20, a drive roll 50, a power source 40, and a robot 90). Other configurations of computer controlled energy delivery apparatuses are possible as well, in accordance with other embodiments, to perform the energy delivery functions of method 400 and the other methods described herein.

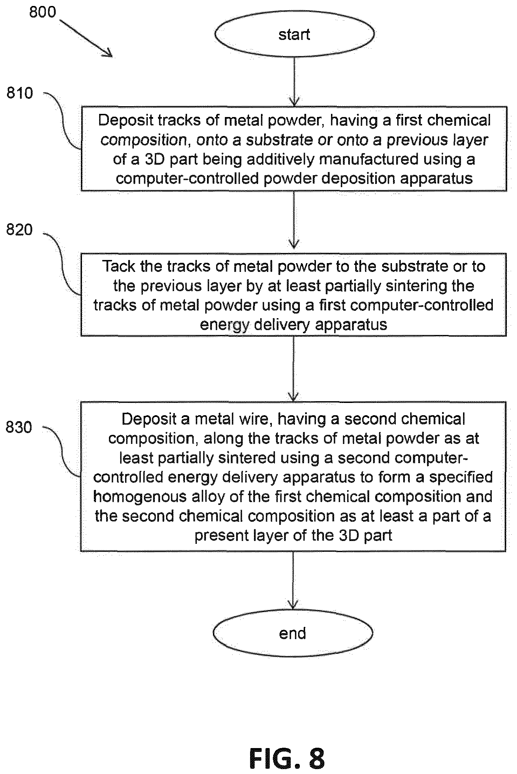

FIG. 8 illustrates a flowchart of a second embodiment of an additive manufacturing method 800 that can be performed using the additive manufacturing system 700 of FIG. 7. At block 810, tracks of metal powder, having a first chemical composition, are deposited onto a substrate or onto a previous layer of a 3D part being additively manufactured using a computer controlled powder deposition apparatus. Patterns of multiple layers of the 3D part are represented and stored as digital data within a computer control system and powder can be laid down according to the patterns under computer control. At block 820, the tracks of metal powder are tacked to the substrate or to the previous layer by at least partially sintering the tracks of metal powder using a first computer controlled energy delivery apparatus (e.g., a low energy computer controlled laser apparatus). At block 830, metal wire, having a second chemical composition, is deposited along the tracks of metal powder as at least partially sintered using a second computer controlled energy delivery apparatus (e.g., a computer controlled GTAW apparatus having a non-consumable electrode, where the metal wire acts as a filler wire). When the metal wire is deposited over the metal powder, a specified homogenous alloy of the first chemical composition and the second chemical composition is formed as at least a part of a present layer of the 3D part. In one embodiment, the first chemical composition and the second chemical composition have no chemical elements in common. In another embodiment, the first chemical composition and the second chemical composition have at least one chemical element in common. In accordance with various embodiments, energy provided by the first and second computer controlled energy delivery apparatuses may be derived from a laser beam, a plasma beam, an electric arc, or an electron beam.

The computer control system controls a first amount of energy applied per unit length by the first computer controlled energy delivery apparatus and a second amount of energy applied per unit length by the second computer controlled energy delivery apparatus over the tracks of metal powder. In accordance with one embodiment, the first amount of energy applied per unit length is less than the second amount of energy applied per unit length over the tracks. In accordance with one embodiment, the computer control system controls a specified ratio of powder amount deposited per unit length over the tracks by the computer controlled powder deposition apparatus. Also, in one embodiment, the computer control system controls a specified ratio of wire amount deposited per unit length over the tracks by the second computer controlled energy delivery apparatus to achieve the specified homogenous alloy. Such control affects the characteristics of the resultant homogenous alloy. The method 800 of FIG. 8 may be repeated for subsequent layers during the manufacturing of the 3D part, using metal powders and metal wire of the same or different chemical compositions, according to the patterns specified for the subsequent layers. In accordance with one embodiment, the metal powder is deposited and sintered on-axis (e.g., along the direction of the pull of gravity) and the metal wire is deposited off-axis (e.g., with the part in a different orientation to that of when the metal powder is deposited and sintered). In this manner, successive layers of a build of the specified homogenous material can be made off-axis (e.g., don't have to build solely in a direction that is perpendicular to the substrate).

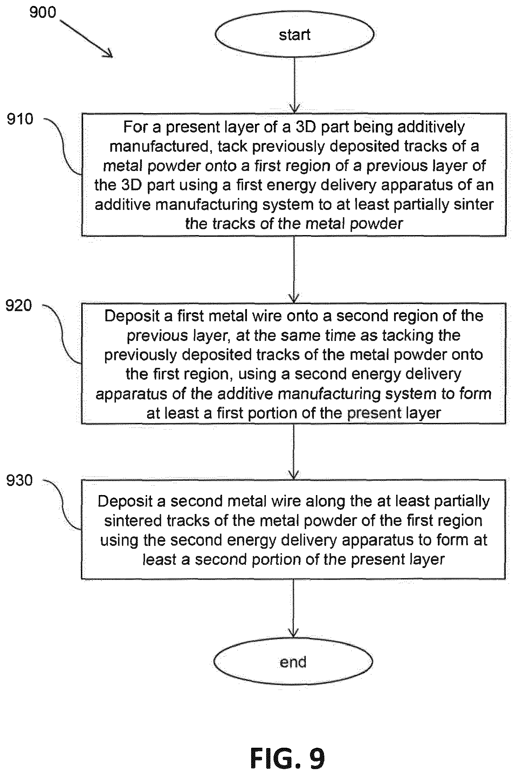

FIG. 9 illustrates a flowchart of a third embodiment of an additive manufacturing method 900 that can be performed using the additive manufacturing system 700 of FIG. 7. Patterns of multiple layers of a 3D part to be additively manufactured are represented and stored as digital data within the additive manufacturing system. At block 910, for a present layer of a 3D part being additively manufactured, previously deposited tracks of a metal powder are tacked onto a first region of a previous layer of the 3D part using a first energy delivery apparatus. The tacking includes applying a first energy from the first energy delivery apparatus along the tracks of the metal powder to at least partially sinter the tracks of the metal powder. At block 920, a first metal wire is deposited onto a second region of the previous layer at the same time as tacking the previously deposited tracks of the metal powder onto the first region. The depositing of the first metal wire includes applying a second energy from a second energy delivery apparatus to at least the first metal wire to form at least a first portion of the present layer. At block 930, a second metal wire is deposited along the at least partially sintered tracks of the metal powder of the first region using the second energy delivery apparatus. The depositing of the second metal wire includes applying a third energy from the second energy delivery apparatus to the second metal wire and the at least partially sintered tracks of the metal powder of the first region to form at least a second portion of the present layer. In this manner, wire can be deposited while powder is being sintered, or vice-versa. In general, the flexibility provided by the system 700 of FIG. 7 allows for the deposition of metal powder, the sintering of metal powder, and the deposition of metal wire in different regions of a layer of a 3D part in an independent manner. Such flexibility can result in increased productivity when additively manufacturing a 3D part.

A computer controller of the additive manufacturing system controls the first energy delivery apparatus and the second energy delivery apparatus. In one embodiment, the controlling results in an amount of the first energy applied per unit length being different than an amount of the third energy applied per unit length along the tracks. In one embodiment, the controlling results in an amount of the first energy applied per unit length being different than an amount of the second energy applied per unit length along the tracks. In one embodiment, the controlling results in an amount of the second energy applied per unit length being different than an amount of the third energy applied per unit length along the tracks. In one embodiment, the controlling results in an amount of the second energy applied per unit length being the same as an amount of the third energy applied per unit length along the tracks.

In accordance with one embodiment, as the layers of a build proceeds away from the substrate, the metal powder composition can be varied from layer to layer to approach a layer having a desired specified homogenous alloy of metal powder and metal wire. Such varying of the metal powder composition may be useful when, for example, the substrate is not compatible with the final specified homogeneous alloy of powder and wire that is desired (e.g., the incompatibility would result in some type of defect such as, for example, cracking). For example, in one embodiment, metal wire can be deposited first on the substrate as a first layer. Next, deposition and sintering of a first metal powder composition (e.g., having 1% powder) followed by deposition of metal wire can be performed on the first layer of the previously deposited metal wire to form a second layer. Then, deposition and sintering of a second metal powder composition (e.g., having 2% powder) followed by deposition of metal wire can be performed on the second layer of the previously deposited metal powder and metal wire to form a third layer. The process can continue layer by layer, building a gradient of composition, until the final desired specified homogeneous alloy is achieved (e.g., building a transition to a desired structure that is sound). In one embodiment, such a process can be used to fill a gap between two structures during an additive manufacturing process where the two structures are not both compatible with a same filling material composition. By generating a gradient of filling material compositions across the filling material from one structure to another, the gap can be filled to form a sound structure.

FIG. 10 illustrates an embodiment of an example computer controller 740 (or a computer control system) of the additive manufacturing system of FIG. 7. The controller 740 includes at least one processor 1014 which communicates with a number of peripheral devices via bus subsystem 1012. These peripheral devices may include a storage subsystem 1024, including, for example, a memory subsystem 1026 and a file storage subsystem 1028, user interface input devices 1022, user interface output devices 1020, and a network interface subsystem 1016. The input and output devices allow user interaction with the controller 740. Network interface subsystem 1016 provides an interface to outside networks and is coupled to corresponding interface devices in other computer systems. For example, the motion controller 180 of the apparatus 100 may share one or more characteristics with the controller 740 and may be, for example, a conventional computer, a digital signal processor, and/or other computing device.

User interface input devices 1022 may include a keyboard, pointing devices such as a mouse, trackball, touchpad, or graphics tablet, a scanner, a touchscreen incorporated into the display, audio input devices such as voice recognition systems, microphones, and/or other types of input devices. In general, use of the term "input device" is intended to include all possible types of devices and ways to input information into the controller 740 or onto a communication network.

User interface output devices 1020 may include a display subsystem, a printer, a fax machine, or non-visual displays such as audio output devices. The display subsystem may include a cathode ray tube (CRT), a flat-panel device such as a liquid crystal display (LCD), a projection device, or some other mechanism for creating a visible image. The display subsystem may also provide non-visual display such as via audio output devices. In general, use of the term "output device" is intended to include all possible types of devices and ways to output information from the controller 740 to the user or to another machine or computer system.

Storage subsystem 1024 stores programming and data constructs that provide or support some or all of the functionality described herein (e.g., as software modules). For example, the storage subsystem 1024 may include a CAD model of a part to be additively manufactured and the logic to identify variations in a deposit location and adjust an energy delivery apparatus to accommodate the identified variations.

Software modules are generally executed by processor 1014 alone or in combination with other processors. Memory 1026 used in the storage subsystem can include a number of memories including a main random access memory (RAM) 1030 for storage of instructions and data during program execution and a read only memory (ROM) 1032 in which fixed instructions are stored. A file storage subsystem 1028 can provide persistent storage for program and data files, and may include a hard disk drive, a floppy disk drive along with associated removable media, a CD-ROM drive, an optical drive, or removable media cartridges. The modules implementing the functionality of certain embodiments may be stored by file storage subsystem 1028 in the storage subsystem 1024, or in other machines accessible by the processor(s) 1014.

Bus subsystem 1012 provides a mechanism for letting the various components and subsystems of the controller 740 communicate with each other as intended. Although bus subsystem 1012 is shown schematically as a single bus, alternative embodiments of the bus subsystem may use multiple buses.

The controller 740 can be of varying types including a workstation, server, computing cluster, blade server, server farm, or any other data processing system or computing device. Due to the ever-changing nature of computing devices and networks, the description of the controller 740 depicted in FIG. 10 is intended only as a specific example for purposes of illustrating some embodiments. Many other configurations of the controller 740 are possible having more or fewer components than the controller depicted in FIG. 10.

While the disclosed embodiments have been illustrated and described in considerable detail, it is not the intention to restrict or in any way limit the scope of the appended claims to such detail. It is, of course, not possible to describe every conceivable combination of components or methodologies for purposes of describing the various aspects of the subject matter. Therefore, the disclosure is not limited to the specific details or illustrative examples shown and described. Thus, this disclosure is intended to embrace alterations, modifications, and variations that fall within the scope of the appended claims, which satisfy the statutory subject matter requirements of 35 U.S.C. §101. The above description of specific embodiments has been given by way of example. From the disclosure given, those skilled in the art will not only understand the general inventive concepts and attendant advantages, but will also find apparent various changes and modifications to the structures and methods disclosed. It is sought, therefore, to cover all such changes and modifications as fall within the spirit and scope of the general inventive concepts, as defined by the appended claims, and equivalents thereof.

**REFERENCE NUMERALS**

| | | | |
|---|---|---|---|
| | | 510 | metal powder |
| | | 510' | tacked metal powder |
| | | 520 | substrate |
| 10 | energy delivery apparatus | 530 | direction of travel |
| 20 | electrode head | 540 | energy |
| 30 | array | 550 | metal wire |
| 32 | electrode | 560 | energy |
| 40 | welding power source | 570 | first layer |
| 50 | drive roll | 580 | next layer |
| 51 | part | 600 | substrate |
| 60 | sensor | 610 | track of metal powder |
| 70 | coil | 710 | powder deposition apparatus |
| 80 | controller | 720 | energy delivery apparatus |
| 90 | robot | 730 | energy delivery apparatus |
| 93 | platform | 740 | additive manufacturing system |
| 100 | energy delivery apparatus | 800 | additive manufacturing method |
| 110 | laser beam | 810 | step deposit metal powder |
| 115 | part | 820 | step tack metal powder |
| 120 | laser device | 830 | step deposit metal wire |
| 125 | controlled direction | 900 | additive manufacturing method |
| 130 | laser power supply | 910 | step tack metal powder |
| 140 | filler wire | 920 | step deposit metal wire |
| 150 | filler wire feeder | 930 | step deposit metal wire |
| 160 | contact tube | 1012 | bus subsystem |
| 170 | power supply | 1014 | processor |
| 180 | motion controller | 1016 | user interface subsystem |
| 190 | robot | 1020 | user interface output device |
| 193 | platform | 1022 | user interface input device |
| 195 | control subsystem | 1024 | storage subsystem |
| 400 | manufacturing method | 1026 | memory subsystem |
| 410 | step deposit metal powder | | |
| 420 | step tack metal powder | 1028 | file storage subsystem |
| 430 | step melt metal wire | 1030 | random access memory |
| 440 | step repeat process | 1032 | read only memory |

## Claims

1. An additive manufacturing system (740), the system comprising:
a computer control system configured to store patterns of multiple layers of a three-dimensional part (51, 115) to be additively manufactured as digital data;
a computer controlled powder deposition apparatus (710) operatively connected to the computer control system and configured to deposit first tracks of metal powder (510), having a first chemical composition, onto a substrate according to a first pattern of a first layer (570) of the three-dimensional part (51, 115) under the control of the computer control system;
a first computer controlled energy delivery apparatus (100, 720, 730) operatively connected to the computer control system and configured to tack the first tracks of metal powder (510) to the substrate (520) along the first pattern under the control of the computer control system by applying a first energy to the first tracks of metal powder (510) along the first pattern to at least partially sinter the first tracks of metal powder (510); and
a second computer controlled energy delivery apparatus (100, 720, 730) operatively connected to the computer control system and configured to deposit a first metal wire (550), having a second chemical composition, along the first tracks of metal powder (510) by applying a second energy to the first metal wire (550) and the first tracks of metal powder (510), as at least partially sintered, to form a first specified homogenous alloy of the first chemical composition and the second chemical composition as at least a portion of the first layer (570).

2. The system of claim 1, wherein the computer control system is further configured to control the first computer controlled energy delivery apparatus (100, 720, 730) and the second computer controlled energy delivery apparatus (100, 720; 730) such that an amount of the first energy applied per unit length is less than an amount of the second energy applied per unit length.

3. The system of claim 1 or 2, wherein the computer control system is further configured to control a specified ratio of powder amount deposited per unit length by the computer controlled powder deposition apparatus (710) and a specified ratio of wire amount deposited per unit length by the second computer controlled energy delivery apparatus (100, 720, 730) to achieve the first specified homogenous alloy.

4. The system of any of the claims 1 to 3, wherein the computer controlled powder deposition apparatus, the first computer controlled energy delivery apparatus (100, 720, 730), and the second computer controlled energy delivery apparatus (100, 720, 730) are independently controlled by the computer control system and are operationally decoupled from each other.

5. The system of the claims 1 to 4, wherein the computer controlled powder deposition apparatus (710) and the first computer controlled energy delivery apparatus (100, 720, 730) are dependently controlled by the computer control system and are operationally coupled to each other, and wherein the second computer controlled energy delivery apparatus (100, 720, 730) is independently controlled by the computer control system and is operationally decoupled from the computer controlled powder deposition apparatus (710) and the first computer controlled energy delivery apparatus (100, 720, 730).

6. The system of any of the claims 1 to 5, wherein the first chemical composition and the second chemical composition have no chemical elements in common, or
wherein the first chemical composition and the second chemical composition have at least one chemical element in common.

7. The system of any of the claims 1 to 6, wherein:
the computer controlled powder deposition apparatus (710) is configured to deposit second tracks of metal powder (510), having the first chemical composition, onto the first layer according to a second pattern of a second layer of the three-dimensional part to be additively manufactured;
the first computer controlled energy delivery apparatus (100, 720, 730) is configured to tack the second tracks of metal powder (510) to the first layer along the second pattern by applying a third energy to the second tracks of metal powder (510) along the second pattern to at least partially sinter the second tracks of metal powder (510); and
the second computer controlled energy delivery apparatus (100, 720, 730) is configured to deposit a second metal wire (550), having the second chemical composition, along the second tracks of metal powder (510) by applying a fourth energy to the second metal wire (550) and the second tracks of metal powder (510), as at least partially sintered, to form the first specified homogenous alloy of the first chemical composition and the second chemical composition as at least a portion of the second layer.

8. The system of any of the claims 1 to 7, wherein:
the computer controlled powder deposition apparatus (710) is configured to deposit second tracks of metal powder (510), having a third chemical composition, onto the first layer (570) according to a second pattern of a second layer of the three-dimensional part to be additively manufactured;
the first computer controlled energy delivery apparatus (100, 720, 730) is configured to tack the second tracks of metal powder (510) to the first layer along the second pattern by applying a third energy to the second tracks of metal powder (510) along the second pattern to at least partially sinter the second tracks of metal powder (510); and
the second computer controlled energy delivery apparatus (100, 720, 730) is configured to deposit a second metal wire (550), having a fourth chemical composition, along the second tracks of metal powder (510) by applying a fourth energy to the second metal wire (550) and the second tracks of metal powder (510), as at least partially sintered, to form a second specified homogenous alloy of the third chemical composition and the fourth chemical composition as at least a portion of the second layer.

9. The system of any of the claims 1 to 8, wherein the first energy is derived from at least one of a laser beam (110), a plasma beam, an electric arc, or an electron beam generated by the first computer controlled energy delivery apparatus, and/or
wherein the second energy is derived from at least one of a laser beam (110), a plasma beam, an electric arc, or an electron beam generated by the second computer controlled energy delivery apparatus (100, 720, 730).

10. An additive manufacturing system (740), the system comprising:
a powder deposition apparatus (710) configured to deposit a metal powder (510), having a first chemical composition, onto a substrate (600) or onto a previous layer of a three-dimensional part being additively manufactured, wherein patterns of multiple layers of the three-dimensional part are represented and stored as digital data within the additive manufacturing system;
a first energy delivery apparatus (100, 720, 730) configured to tack tracks of the metal powder (510) to the substrate (600) or to the previous layer according to a pattern of a present layer of the three-dimensional part being additively manufactured by applying a first energy along the tracks of the metal powder (510) to at least partially sinter the tracks of the metal powder (510); and
a second energy delivery apparatus (100, 720, 730) configured to deposit a metal wire (550), having a second chemical composition, along the tracks of the metal powder (510) by applying a second energy to the metal wire (550) and the tracks of the metal powder (510), as at least partially sintered, to form a specified homogenous alloy of the first chemical composition and the second chemical composition as at least a portion of the present layer.

11. The system of claim 10, further comprising at least one computer controller configured to control a specified ratio of powder amount deposited per unit length by the powder deposition apparatus (710) and a specified ratio of wire amount deposited per unit length by the second energy delivery apparatus (100, 720, 730) to achieve the specified homogenous alloy.

12. The system of claim 10 or 11, wherein the powder deposition apparatus (710), the first energy delivery apparatus (100, 720, 730), and the second energy delivery apparatus (100, 720, 730) are independently controlled and are operationally decoupled from each other.

13. An additive manufacturing system (740), the system comprising:
a first energy delivery apparatus (100, 720, 730) configured to, for a present layer of a three-dimensional part (51, 115) being additively manufactured, tack previously deposited tracks of a metal powder (510) onto a first region of a previous layer of the three-dimensional part (51, 115) by applying a first energy from the first energy delivery apparatus (100, 720, 730) along the tracks of the metal powder (510) to at least partially sinter the tracks of the metal powder (510), wherein patterns of multiple layers of the three-dimensional part (51, 115) are represented and stored as digital data within the additive manufacturing system;
a second energy delivery apparatus (100, 720, 730) configured to:
deposit a first metal wire (550) onto a second region of the previous layer, at the same time as the tacking of the previously deposited tracks of the metal powder (510) onto the first region is occurring, by applying a second energy to at least the first metal wire (550) to form at least a first portion of the present layer;
deposit a second metal wire (550) along the at least partially sintered tracks of the metal powder (510) of the first region by applying a third energy to the second metal wire (550) and the at least partially sintered tracks of the metal powder (510) of the first region to form at least a second portion of the present layer.

14. The system of any of the claims 10 to 13, further comprising at least one computer controller (80) configured to control the first energy delivery apparatus (100, 720, 730) and the second energy delivery apparatus (100, 720, 730) such that an amount of the first energy applied per unit length is different than an amount of the second and/or third energy applied per unit length.

15. The system of claim 13 or 14, further comprising at least one computer controller (80) configured to control the second energy delivery apparatus (100, 720, 730) such that an amount of the second energy applied per unit length is different than an amount of the third energy applied per unit length, and/or
further comprising at least one computer controller (80) configured to control the second energy delivery apparatus (100, 720, 730), such that an amount of the second energy applied per unit length is the same as an amount of the third energy applied per unit length.
